# FASCICULE DE BREVET EUROPEEN

(11) **EP 1 915 933 B1**
(45) Date de publication et mention de la délivrance du brevet: **24.02.2010**
(21) Numéro de dépôt: 07356149.0
(22) Date de dépôt: 22.10.2007
(51) Int. Cl.: A47J 43/046

(54) **Récipient de travail pour appareil électroménager de préparation culinaire**
Arbeitsbehälter für Haushaltsgerät zur Essenszubereitung
Work container for a kitchen appliance

(30) Priorité: 26.10.2006 FR 0609394
(43) Date de publication de la demande: 30.04.2008
(73) Titulaire: SEB S.A., 69130 Ecully (FR)
(72) Inventeur: Perrier, Matthieu, 65310 Laloubere (FR)
(74) Mandataire: Kiehl, Hubert

(56) Documents cités:
- US-A- 3 760 968
- US-B1- 6 193 407

## Description

La présente invention concerne le domaine technique des appareils électroménagers de préparation culinaire comportant un outil de travail rotatif et un récipient de travail. L'outil de travail rotatif peut être prévu notamment pour mélanger, battre, broyer, couper etc....

La présente invention concerne notamment les récipients de travail réalisés en matériau polymère. Usuellement, les récipients du type précité sont réalisés en matière plastique rigide avec des épaisseurs généralement supérieures au millimètre. Ces récipients peuvent être nettoyables en machine à laver.

Un inconvénient de ces réalisations réside dans la difficulté d'intégrer des marquages, décorations ou personnalisations auxdits récipients. Les réalisations autres que les creux ou les reliefs supportent mal le passage en lave-vaisselle ou s'avèrent onéreuses à réaliser.

Un autre inconvénient de ces réalisations peut résider dans la masse desdits récipients.

Un autre inconvénient de ces réalisations peut résider dans une certaine fragilité desdits récipients, pour lesquels les chutes doivent être évitées.

La présente invention concerne également les récipients de travail réalisés en d'autres matériaux, notamment en métal (par exemple en acier inoxydable) ou en verre. De tels récipients peuvent également être nettoyables en machine à laver.

Toutefois, l'intégration auxdits récipients de marquages, décorations ou personnalisations supportant le passage en lave-vaisselle s'avère également onéreuse à réaliser.

Les documents US 6193407 B et US 3760968 A sont considérés comme utiles à la compréhension de l'invention.

Un but de la présente invention est de proposer un récipient de travail pour appareil électroménager de préparation culinaire, dont la différentiation soit facilitée.

Un autre but de la présente invention est de proposer un récipient de travail pour appareil électroménager de préparation culinaire qui soit compatible avec un lavage au lave-vaisselle.

Ces buts sont atteints avec un récipient de travail pour appareil électroménager de préparation culinaire, formant un réceptacle présentant une paroi latérale, caractérisé en ce qu'un manchon thermorétractable s'étend sur au moins une partie de la hauteur de la paroi latérale et en ce que la paroi latérale présente sur ladite hauteur au moins une portion de surface s'écartant d'une géométrie de révolution. L'utilisation d'un manchon thermorétractable permet de différencier plus aisément les récipients de travail. La présence d'au moins une portion de surface s'écartant d'une géométrie de révolution permet d'entraver la rotation du manchon thermorétractable sur la circonférence du récipient de travail, ce qui permet une meilleure durabilité du récipient de travail ainsi réalisé.

Avantageusement alors, la paroi latérale présente, sur toute la hauteur de la portion de surface, des sections transversales ayant un profil extérieur dépourvu de point d'inflexion. En d'autres termes, le profil extérieur de ces sections transversales reste toujours convexe. Cette disposition permet d'éviter que le manchon forme une paroi s'étendant à distance de la paroi latérale du récipient, une telle paroi étant susceptible de se dégrader beaucoup plus rapidement.

Avantageusement encore, la paroi latérale présente, sur la hauteur de la portion de surface, des sections transversales ayant une superficie variant selon ladite hauteur. Cette disposition permet de former des points d'ancrage pour le manchon thermorétactable, afin d'éviter le glissement du manchon thermorétactable le long du réceptacle.

Avantageusement encore, la paroi latérale présente, de part et d'autre de la hauteur de la portion de surface, des sections transversales ayant une superficie supérieure à la superficie des sections transversales de la hauteur de la portion de surface. Cette disposition permet également de former des points d'ancrage pour le manchon thermorétactable, afin d'éviter le glissement du manchon thermorétactable le long du réceptacle.

Avantageusement encore, la portion de surface s'étend en retrait par rapport à un profil circulaire. Cette disposition permet de réaliser une nervure à l'intérieur du récipient de travail, qui peut contribuer à favoriser le mélange de préparations liquides.

Avantageusement encore, la portion de surface présente un retrait inférieur à 3 mm par rapport à un profil circulaire. Cette disposition permet une meilleure rétraction du manchon lors de la réalisation du récipient de travail.

Avantageusement encore le réceptacle comporte au moins une protubérance externe non recouverte par le manchon thermorétractable. Cette protubérance externe peut être utilisée pour commander le bloc moteur de l'appareil utilisé avec le récipient de travail.

Avantageusement alors ladite ou lesdites protubérance(s) externe(s) est/sont agencée(s) sur la paroi latérale du côté d'une ouverture du réceptacle. Cette disposition permet d'utiliser ladite ou lesdites protubérances externe(s) comme organe de commande lorsqu'un bouchon portant un outil rotatif ferme l'ouverture.

Avantageusement encore la paroi latérale est susceptible d'être déformée élastiquement lors de la préhension du réceptacle. Cette disposition peut favoriser la préhension du récipient de travail en l'absence de poignée.

Avantageusement encore le récipient de travail forme une enceinte de travail allongée. Cette disposition est particulièrement favorable pour la réalisation de préparations liquides et leur consommation à même ledit récipient de travail.

Avantageusement encore le réceptacle est dépourvu de nervure interne. Ladite ou lesdites zones non concaves peuvent participer au mélange d'une préparation liquide.

Avantageusement encore le manchon thermorétractable présente une face interne pourvue de marquages. Cette disposition est particulièrement favorable pour permettre le passage du récipient de travail au lave-vaisselle tout en préservant la durabilité des marquages.

Avantageusement encore un moyen adhésif est disposé entre le manchon thermorétractable et la paroi latérale. Cette disposition favorise la tenue du manchon thermorétractable et la durabilité des marquages.

Ces buts sont atteints également avec un appareil électroménager de préparation culinaire comprenant un boîtier moteur présentant une sortie d'entraînement, un récipient de travail présentant un outil de travail monté mobile en rotation, la sortie d'entraînement étant prévue pour entraîner en rotation l'outil de travail lorsque le récipient de travail est en place sur le boîtier moteur, du fait que le récipient de travail est conforme à l'une des caractéristiques précédentes.

L'invention sera mieux comprise à l'étude d'un exemple de réalisation, pris à titre nullement limitatif, illustré dans les figures annexées, dans lesquelles :
- la figure 1 est une vue en perspective éclatée d'un boîtier moteur et d'un récipient de travail, le récipient de travail comportant un réceptacle selon l'invention et un bouchon,
- la figure 2 est une vue de côté éclatée du boîtier moteur et du récipient de travail représentés à la figure 1,
- la figure 3 est une vue de face éclatée du boîtier moteur et du récipient de travail représentés aux figures 1 et 2, le boîtier moteur et le bouchon étant représentés en coupe partielle,
- la figure 4 est une vue en perspective du bouchon visible aux figures 1 à 3,
- la figure 5 est une vue en coupe de face retournée du réceptacle visible aux figures 1 à 3,
- la figure 6 est une vue en coupe de côté retournée du réceptacle visible aux figures 1 à 3.

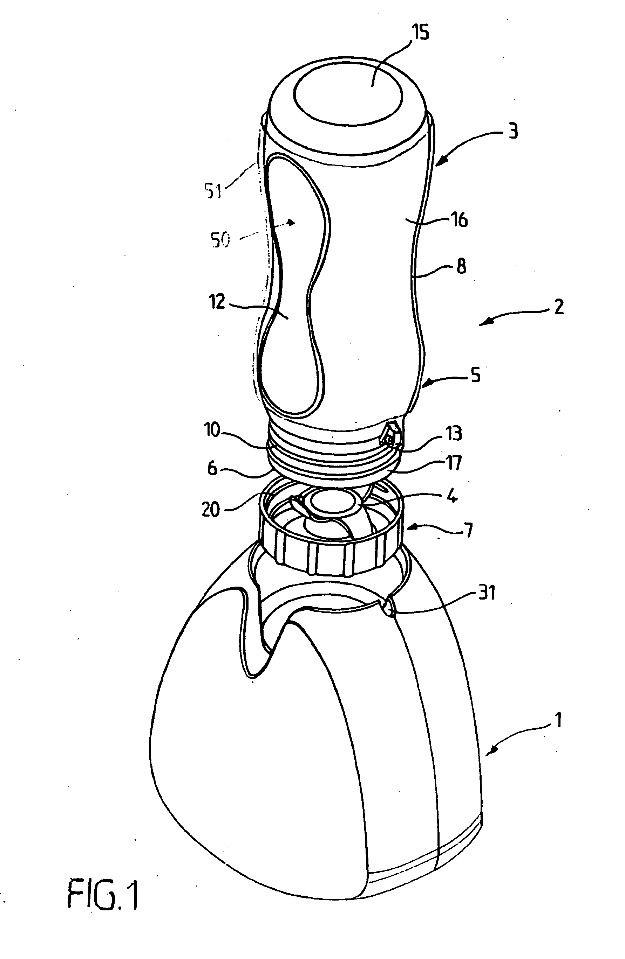

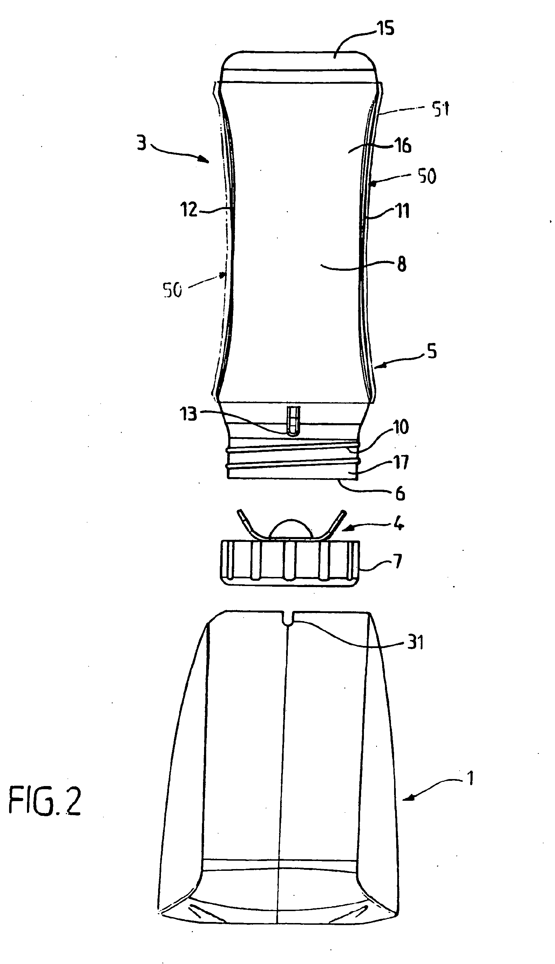

L'appareil électroménager de préparation culinaire illustré aux figures 1 à 3 comporte un boîtier moteur 1 et un récipient de travail 2 prévu pour être disposé sur le boîtier moteur 1. Le récipient de travail 2 forme une enceinte de travail 3 allongée. Le récipient de travail 2 présente un outil de travail 4 monté mobile en rotation. L'enceinte de travail 3 allongée comporte à une extrémité l'outil de travail 4 monté mobile en rotation.

L'enceinte de travail 3 présente une section transversale interne augmentant de part et d'autre d'un rétrécissement 8 agencé entre 1/4 et 3/4 de la hauteur de l'enceinte de travail 3. De préférence le rétrécissement 8 est agencé entre 1/3 et 2/3 de la hauteur de l'enceinte de travail 3. Tel qu'illustré aux figures, le rétrécissement 8 est disposé sensiblement à mi-hauteur de l'enceinte de travail 3.

Tel que bien visible sur les figures 1 à 3, l'enceinte de travail 3 présente une section transversale interne variant en fonction de la distance à l'outil de travail 4.

Ainsi, tel que visible sur les figures, l'enceinte de travail 3 est allongée selon une direction, l'enceinte de travail 3 présentant selon ladite direction une section transversale interne variable, l'enceinte de travail 3 comportant à une extrémité de ladite direction l'outil de travail 4 monté mobile en rotation, la section transversale interne de l'enceinte de travail 3 augmentant selon ladite direction de part et d'autre du rétrécissement 8 agencé entre 1/4 et 3/4 de la hauteur de l'enceinte de travail allongée, la hauteur de l'enceinte de travail 3 étant définie selon ladite direction.

Lorsque l'enceinte de travail 3 est disposée en position retournée, tel que représenté aux figures 1 à 3, le rétrécissement 8 définit une chambre inférieure, dans laquelle est agencé l'outil de travail 4, et une chambre supérieure. Le rétrécissement 8 est agencé entre la chambre inférieure et la chambre supérieure.

La section transversale interne de l'enceinte de travail 3 diminue à l'approche de chacune des extrémités.

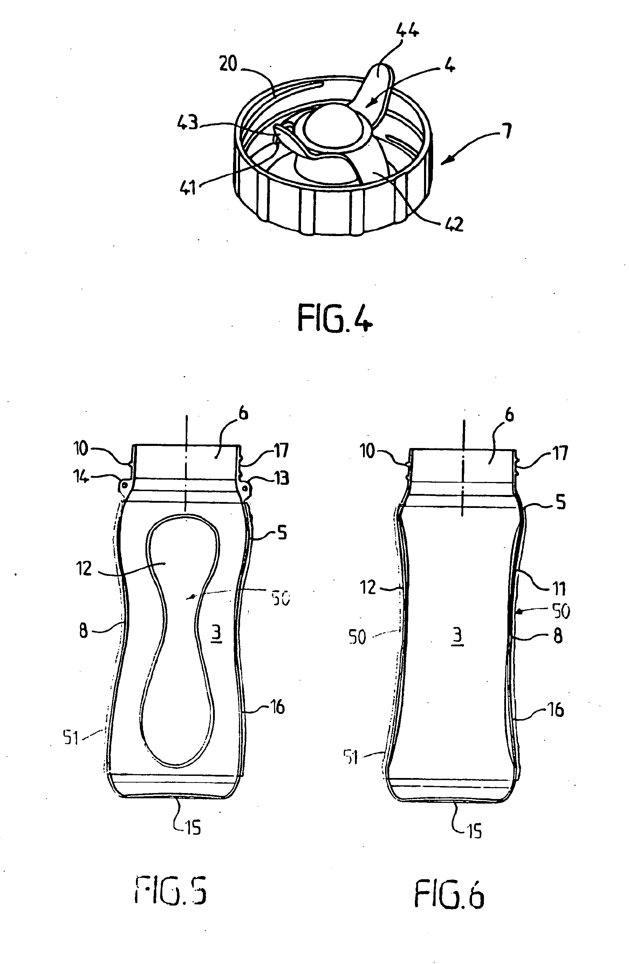

La section transversale interne de l'enceinte de travail 3 au niveau du rétrécissement 8 est avantageusement inférieure ou égale à 90% de la section transversale interne maximale de l'enceinte de travail 3 agencée entre l'outil de travail 4 et le rétrécissement 8, et de préférence inférieure ou égale à 80% de la section transversale interne maximale de l'enceinte de travail 3 agencée entre l'outil de travail 4 et le rétrécissement 8. Tel que montré aux figures 5 et 6, la section transversale interne de l'enceinte de travail 3 au niveau du rétrécissement 8 est proche de 70% de la section transversale interne maximale de l'enceinte de travail 3 agencée entre l'outil de travail 4 et le rétrécissement 8.

Le rétrécissement 8 s'étend sur le tour de la périphérie de l'enceinte de travail allongée 3. La largeur de l'enceinte de travail 3 au niveau du rétrécissement 8 est avantageusement inférieure à la moitié de la hauteur de l'enceinte de travail 3. Tel que montré aux figures 5 et 6, la largeur de l'enceinte de travail 3 au niveau du rétrécissement 8 est proche du tiers de la hauteur de l'enceinte de travail 3.

L'enceinte de travail 3 comporte deux méplats latéraux 11, 12 agencés face à face. Les méplats latéraux 11, 12 présentent une forme en 8. L'enceinte de travail 3 est dépourvue de nervure interne.

L'enceinte de travail 3 est formée par un réceptacle 5 comportant une ouverture 6 fermée par un bouchon 7. L'enceinte de travail 3 formée par le réceptacle 5 assemblé avec le bouchon 7 est étanche. Le réceptacle 5 présente un pas de vis externe 10 prévu pour recevoir un pas de vis interne 20 ménagé dans le bouchon 7. L'outil de travail 4 est monté sur le bouchon 7.

Le réceptacle 5 présente une seule ouverture 6, formant l'ouverture de remplissage ou de versement de l'enceinte de travail 3. Le rétrécissement 8 et les méplats latéraux sont ménagés sur le réceptacle 5. L'ouverture 6 présente avantageusement une taille juste suffisante pour permettre l'introduction directe d'un yaourt figé entier. Dans l'exemple de réalisation illustré aux figures, l'ouverture 6 présente une largeur de 55 mm.

Le réceptacle 5 comporte deux protubérances externes 13, 14 agencées latéralement par rapport à l'ouverture 6. Le réceptacle 5 présente un fond 15. Le réceptacle 5 présente une paroi latérale 16. Les protubérances externes 13, 14 sont agencées sur la paroi latérale 16 du côté de l'ouverture 6. La paroi latérale 16 est terminée par un goulot 17. Les protubérances externes 13, 14 sont agencées sur la paroi latérale 16 près du goulot 17. Le pas de vis externe 10 est agencé sur le goulot 17. Le réceptacle 5 est dépourvu de nervure interne.

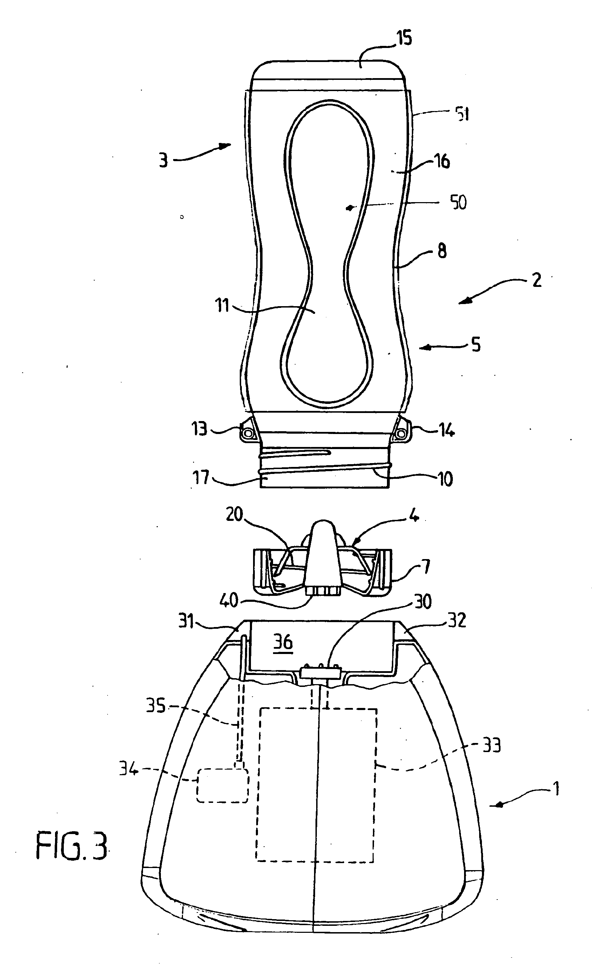

Les protubérances externes 13, 14 sont prévues pour être engagées dans des échancrures 31, 32 du boîtier moteur 1. Tel que visible à la figure 3, le boîtier moteur 1 comporte un moteur 33 commandé par un interrupteur 34. Une tige 35 émergeant dans l'échancrure 31 peut actionner l'interrupteur 34 lorsque le réceptacle 5 est mis en place sur le boîtier moteur 1.

Le réceptacle 5 est réalisé en une seule pièce. Du fait de l'absence de nervure interne, et de la faible épaisseur des protubérances externes 13, 14, le réceptacle 5 peut être avantageusement réalisé par extrusion-soufflage. Ce procédé permet d'obtenir le réceptacle 5 de manière rapide et économique. De ce fait, la paroi latérale 16 peut être réalisée en matériau relativement souple. Ainsi la paroi latérale 16 est susceptible d'être déformée élastiquement lors de la préhension du réceptacle 5.

Ainsi le récipient de travail 2 forme le réceptacle 5 présentant le fond 15, la paroi latérale 16 et l'ouverture 6.

Un manchon thermorétractable 51 s'étend sur au moins une partie de la hauteur de la paroi latérale 16. La paroi latérale 16 présente sur ladite hauteur deux portions de surface 50 s'écartant d'une géométrie de révolution. Les portions de surface 50 sont formées par les méplats 11, 12. La circonférence de la paroi latérale 16 présente un profil circulaire en dehors des portions de surface 50. Ainsi la paroi latérale présente une géométrie de révolution en dehors des portions de surface 50.

La paroi latérale 16 présente, sur toute la hauteur de la portion de surface 50, des sections transversales ayant un profil extérieur dépourvu de point d'inflexion, la superficie desdites sections transversales étant définie par rapport à la paroi extérieure desdites sections transversales. Ainsi le manchon thermorétractable 51 peut se resserrer en épousant la paroi latérale 16, sans laisser d'espace par rapport à la paroi latérale 16.

Les portions de surface 50 s'étendent en retrait par rapport à un profil circulaire. Les portions de surface 50 présentent avantageusement un retrait inférieur à 3 mm par rapport à un profil circulaire.

Le réceptacle 5 comporte deux protubérances externes 13, 14 non recouvertes par le manchon thermorétractable 51. Le manchon thermorétractable 51 s'étend sur la circonférence de la paroi latérale 16 entre les deux protubérances externes 13, 14 et le fond 15. La superficie des sections transversales de la paroi latérale 16 présente deux maxima sous le manchon thermorétractable 51. La superficie des sections transversales de la paroi latérale 16 diminue à partir desdits maxima en direction des extrémités du manchon thermorétractable, vers le fond 15 et vers les deux protubérances externes 13, 14. La superficie des sections transversales de la paroi latérale 16 diminue à partir desdits maxima en direction de la partie centrale du manchon thermorétractable.

Le manchon thermorétractable 51 est par exemple réalisé en polyéthylène téréphtalate (PET) à partir d'un film présentant une épaisseur comprise entre 45 et 75 µm. Le manchon thermorétractable 51 présente avantageusement une face interne pourvue de marquages.

Un moyen adhésif est avantageusement disposé entre le manchon thermorétractable 51 et la paroi latérale 16. Le moyen adhésif est par exemple formé par une laque thermoréactive. Le moyen adhésif peut notamment être disposé sur les extrémités inférieure et supérieure du manchon thermorétractable 51, ou sur toute la surface du manchon thermorétractable 51. Un dépôt de moyen adhésif partiel peut être envisagé, notamment sous la forme d'un réseau en nid d'abeille.

Le récipient de travail 2 est réutilisable et peut être passé au lave-vaisselle sans dégradation des marquages présents sur le manchon thermorétractable 51.

L'outil de travail 4 est non coupant. Tel que mieux visible à la figure 4, l'outil de travail 4 comporte deux lames 41, 42 inclinées vers le bas et deux lames 43, 44 inclinées vers le haut. L'outil de travail 4 est monté sur un axe présentant une conformation d'entraînement 40, visible sur la figure 3.

Le boîtier moteur 1 présente une sortie d'entraînement 30. La sortie d'entraînement 30 est agencée au fond d'un logement 36 du boîtier moteur 1. Le logement 36 est disposé entre les échancrures 31, 32. La sortie d'entraînement 30 est prévue pour coopérer avec la conformation d'entraînement 40 lorsque le récipient de travail 2 est en place sur le boîtier moteur 1. Le moteur 33 est relié à la sortie d'entraînement 30. Ainsi la sortie d'entraînement 30 est prévue pour entraîner en rotation l'outil de travail 4 lorsque le récipient de travail 2 est en place sur le boîtier moteur 1.

A titre de variante, la paroi latérale 16 peut présenter, de part et d'autre de la hauteur des portions de surface 50, des sections transversales ayant une superficie supérieure à la superficie des sections transversales de ladite hauteur. Des conformations telles que les protubérances externes 13, 14 peuvent notamment contribuer à former des sections transversales ayant une superficie supérieure à la superficie des sections transversales de ladite hauteur.

A titre de variante, la paroi latérale 16 peut présenter sur la hauteur recouverte par le manchon thermorétractable 51 au moins une portion de surface 50 s'écartant d'une géométrie de révolution. Par exemple, la circonférence de la paroi latérale 16 peut présenter, au moins sur certaines sections transversales, un profil elliptique formant au moins une portion de surface s'écartant d'une géométrie de révolution.

A titre de variante la paroi latérale 16 peut présenter, de part et d'autre de la hauteur d'une portion de surface s'écartant d'une géométrie de révolution et recouverte par le manchon thermorétractable, des sections transversales ayant une superficie supérieure à la superficie des sections transversales de la hauteur de ladite portion de surface. Un réceptacle selon cette forme de réalisation peut par exemple présenter des sections transversales centrales de géométrie polygonale reliées par des angles arrondis, et des sections transversales supérieures et inférieures, non recouvertes par le manchon thermorétractable, présentant une superficie supérieure par rapport à la superficie des sections transversales centrales recouvertes par le manchon thermorétractable.

A titre de variante, pour faciliter le mélange de la préparation, l'enceinte de travail allongée peut présenter un seul méplat latéral, ou plus de deux méplats latéraux.

A titre de variante, le réceptacle peut présenter une autre ouverture, notamment à l'autre extrémité, fermée par un autre bouchon. Cette disposition peut contribuer à faciliter la réalisation et/ou le nettoyage du réceptacle.

A titre de variante le réceptacle peut ne comporter qu'une seule protubérance externe non recouverte par le manchon thermorétractable, ou au contraire, plus de deux protubérances externes non recouvertes par le manchon thermorétractable.

A titre de variante, l'outil de travail peut notamment être monté sur le fond du réceptacle.

A titre de variante, le récipient de travail peut notamment être réalisé en injection-soufflage.

A titre de variante, le récipient de travail n'est pas nécessairement réalisé en matière plastique.

La présente invention n'est nullement limitée à l'exemple de réalisation décrit et à ses variantes, mais englobe de nombreuses modifications dans le cadre des revendications.

## Revendications

1. Récipient de travail pour appareil électroménager de préparation culinaire, formant un réceptacle (5) présentant une paroi latérale (16), **caractérisé en ce qu'**un manchon thermorétractable (51) s'étend sur au moins une partie de la hauteur de la paroi latérale (16) et **en ce que** la paroi latérale (16) présente sur ladite hauteur au moins une portion de surface (50) s'écartant d'une géométrie de révolution.

2. Récipient de travail selon la revendication 1, **caractérisé en ce que** la paroi latérale (16) présente, sur toute la hauteur de la portion de surface (50), des sections transversales ayant un profil extérieur dépourvu de point d'inflexion.

3. Récipient de travail selon l'une des revendications 1 ou 2, **caractérisé en ce que** la paroi latérale (16) présente, sur la hauteur de la portion de surface (50), des sections transversales ayant une superficie variant selon ladite hauteur.

4. Récipient de travail selon l'une des revendications 1 ou 2, **caractérisé en ce que** la paroi latérale (16) présente, de part et d'autre de la hauteur de la portion de surface (50), des sections transversales ayant une superficie supérieure à la superficie des sections transversales de la hauteur de la portion de surface (50).

5. Récipient de travail selon l'une des revendications 1 à 4, **caractérisé en ce que** la portion de surface (50) s'étend en retrait par rapport à un profil circulaire.

6. Récipient de travail selon la revendication 5, **caractérisé en ce que** la portion de surface (50) présente un retrait inférieur à 3 mm par rapport à un profil circulaire.

7. Récipient de travail selon l'une des revendications 1 à 6, **caractérisé en ce que** le réceptacle (5) comporte au moins une protubérance externe (13, 14) non recouverte par le manchon thermorétractable (51).

8. Récipient de travail selon la revendication 7, **caractérisé en ce que** ladite ou lesdites protubérance(s) externe(s) (13, 14) est/sont agencée(s) sur la paroi latérale (16) du côté d'une ouverture (6) du réceptacle (5).

9. Récipient de travail selon l'une des revendications 1 à 8, **caractérisé en ce que** la paroi latérale (16) est susceptible d'être déformée élastiquement lors de la préhension du réceptacle (5).

10. Récipient de travail selon l'une des revendications 1 à 9, **caractérisé en ce qu'**il forme une enceinte de travail (3) allongée.

11. Récipient de travail selon l'une des revendications 1 à 10, **caractérisé en ce que** le réceptacle (5) est dépourvu de nervure interne.

12. Récipient de travail selon l'une des revendications 1 à 11, **caractérisé en ce que** le manchon thermorétractable (51) présente une face interne pourvue de marquages.

13. Récipient de travail selon l'une des revendications 1 à 12, **caractérisé en ce qu'**un moyen adhésif est disposé entre le manchon thermorétractable (51) et la paroi latérale (16).

14. Appareil électroménager de préparation culinaire comprenant un boîtier moteur (1) présentant une sortie d'entraînement (30), un récipient de travail (2) présentant un outil de travail (4) monté mobile en rotation, la sortie d'entraînement (30) étant prévue pour entraîner en rotation l'outil de travail (4) lorsque le récipient de travail (2) est en place sur le boîtier moteur (1), **caractérisé en ce que** le récipient de travail (2) est conforme à l'une des revendications 1 à 13.

## Claims

1. A working receptacle for a domestic electrical cooking appliance, forming a receptacle (5) with a lateral wall (16), **characterised in that** a thermo-retractable sleeve (51) extends at least over a part of the height of the lateral wall (16) and **in that** the lateral wall (16) offers up to the said height at least a portion of the surface (50) displacing itself in a revolving geometric movement.

2. A working receptacle according to Claim 1, **characterised in that** the lateral wall (16) displays transversal sections over all the height of the portion of the surface (50) having an exterior profile devoid of any inflection point.

3. A working receptacle according to any one of Claims 1 or 2, **characterised in that** the lateral wall (16) displays transversal sections over the height of the portion of the surface (50) having a superficial area varying with the said height.

4. A working receptacle according to any one of Claims 1 or 2, **characterised in that** the lateral wall (16) displays transversal sections of part and other of the height of the portion of the surface (50) having a superficial area superior to the transversal sections of the height of the portion of the surface (50).

5. A working receptacle according to any one of Claims 1 to 4, **characterised in that** the portion of the surface (50) extending to the rear in relation to a circular profile.

6. A working receptacle according to Claim 5, **characterised in that** the portion of the surface (50) displays an interior recess of 3 mm in relation to a circular profile.

7. A working receptacle according to any one of Claims 1 to 6, **characterised in that** receptacle (5) comprises at least an external protuberance (13, 14) not covered by the thermo-retractable sleeve (51).

8. A working receptacle according to Claim 7, **characterised in that** the said or various said external protuberance(s) (13, 14) is / are fitted on the lateral wall (16) at the side of the opening (6) of the receptacle (5).

9. A working receptacle according to any one of Claims 1 to 8, **characterised in that** the lateral wall (16) is susceptible to being elastically deformed when pressure is applied to the receptacle (5) by gripping.

10. A working receptacle according to any one of Claims 1 to 9, **characterised in that** it forms an elongated working enclosure (3).

11. A working receptacle according to any one of Claims 1 to 10, **characterised in that** the receptacle (5) is devoid of internal nervure or ribbing.

12. A working receptacle according to any one of Claims 1 to 11, **characterised in that** the thermo-retractable sleeve (51) displays an internal face provided with markings.

13. A working receptacle according to any one of Claims 1 to 12, **characterised in that** an adhesive facility is provided between the thermo-retractable sleeve (51) and the lateral wall (16).

14. A domestic electrical cooking preparation appliance comprising an electrical motor housing (1) displaying an exiting drive shaft (30), a working receptacle (2) displaying a working tool (4) mounted in a mobile rotational mode and the exiting drive shaft (30) being foreseen as a rotary drive for the working tool (4) when the working receptacle (2) is in place on the electrical motor housing (1), **characterised in that** the working receptacle (2) is according to any one of Claims 1 to 13.

## Patentansprüche

1. Arbeitsbehälter für ein elektrisches Küchengerät zur Nahrungsmittelzubereitung, der ein Gefäß (5) mit einer Seitenwand (16) bildet, **dadurch gekennzeichnet, dass** sich zumindest über einen Teil der Höhe der Seitenwand (16) eine Schrumpfhülle (51) erstreckt und dass die Seitenwand (16) in besagter Höhe mindestens einen Flächenbereich (50) aufweist, der von der Rundgeometrie abweicht.

2. Arbeitsbehälter nach Anspruch 1, **dadurch gekennzeichnet, dass** die Seitenwand (16) über die gesamte Höhe des Flächenbereichs (50) Querprofile aufweist, in deren Außenprofil kein Wendepunkt auftritt.

3. Arbeitsbehälter nach Anspruch 1 oder 2, **dadurch gekennzeichnet, dass** die Seitenwand (16) über die Höhe des Flächenbereichs (50) Querprofile aufweist, deren Flächenmaß in Abhängigkeit von besagter Höhe variiert.

4. Arbeitsbehälter nach Anspruch 1 oder 2, **dadurch gekennzeichnet, dass** die Seitenwand (16) oberhalb und unterhalb des Flächenbereichs (50) Querprofile aufweist, deren Flächenmaß das Flächenmaß der Querprofile der Höhe des Flächenbereichs (50) überschreitet.

5. Arbeitsbehälter nach einem der Ansprüche 1 bis 4, **dadurch gekennzeichnet, dass** der Flächenbereich (50) bezogen auf ein Kreisprofil eine Abflachung aufweist.

6. Arbeitsbehälter nach Anspruch 5, **dadurch gekennzeichnet, dass** der Flächenbereich (50) eine Abflachung von weniger als 3 mm bezogen auf ein Kreisprofil aufweist.

7. Arbeitsbehälter nach einem der Ansprüche 1 bis 6, **dadurch gekennzeichnet, dass** das Gefäß (5) über mindestens eine äußere Protuberanz (13, 14) verfügt, die nicht von der Schrumpfhülle (51) überdeckt wird.

8. Arbeitsbehälter nach Anspruch 7, **dadurch gekennzeichnet, dass** die äußere(n) Protuberanz(en) (13, 14) auf der Seitenwand (16) auf Seite einer Öffnung (6) des Gefäßes (5) angeordnet ist/sind.

9. Arbeitsbehälter nach einem der Ansprüche 1 bis 8, **dadurch gekennzeichnet, dass** die Seitenwand (16) beim Ergreifen des Gefäßes (5) elastisch verformbar ist.

10. Arbeitsbehälter nach einem der Ansprüche 1 bis 9, **dadurch gekennzeichnet, dass** er ein längliches Umschließungsgehäuse (3) darstellt.

11. Arbeitsbehälter nach einem der Ansprüche 1 bis 10, **dadurch gekennzeichnet, dass** das Gefäß (5) keine Innenriffelung aufweist.

12. Arbeitsbehälter nach einem der Ansprüche 1 bis 11, **dadurch gekennzeichnet, dass** die Schrumpfhülle (51) eine Innenseite mit Markierungen aufweist.

13. Arbeitsbehälter nach einem der Ansprüche 1 bis 12, **dadurch gekennzeichnet, dass** zwischen Schrumpfhülle (51) und Seitenwand (16) ein Haftmittel angebracht ist.

14. Elektrisches Küchengerät zur Nahrungsmittelzubereitung bestehend aus einem Motorgehäuse (1) mit Antriebsaustritt (30) und einem Arbeitsbehälter (2) mit einem rotationsbeweglich montierten Arbeitswerkzeug (4), wobei der Antriebsaustritt (30) zur Auslösung der Rotationsbewegung des Arbeitswerkzeugs (4) vorgesehen ist, sobald der Arbeitsbehälter (2) auf dem Motorgehäuse (1) montiert ist, **dadurch gekennzeichnet, dass** der Arbeitsbehälter (2) mit einem der Ansprüche 1 bis 13 übereinstimmt.
